# FASCICULE DE BREVET EUROPEEN

(11) **EP 2 599 154 B1**
(45) Date de publication et mention de la délivrance du brevet: **30.11.2016**
(21) Numéro de dépôt: 11740899.7
(22) Date de dépôt: 29.07.2011
(51) Int. Cl.: H01M 10/613, H01M 10/625, H01M 10/647, H01M 10/6555, H01M 2/10

(54) **SYSTÈME DE REFROIDISSEMENT DE BATTERIE ÉLECTRIQUE ET BATTERIE COMPRENANT UN TEL SYSTÈME**
SYSTEM ZUR KÜHLUNG EINER ELEKTRISCHEN BATTERIE UND BATTERIE MIT EINEM DERARTIGEN SYSTEM
SYSTEM FOR COOLING AN ELECTRICAL BATTERY, AND BATTERY INCLUDING SUCH A SYSTEM

(30) Priorité: 29.07.2010 FR 1056275; 29.07.2010 FR 1056272
(43) Date de publication de la demande: 05.06.2013
(73) Titulaire: E4V, 92200 Neuilly/Seine (FR)
(72) Inventeur: GUILLARD, Stéphane, F-72650 La Bazoge (FR); VANBUTSEL, Michael, F-72560 Change (FR); GOUNOT, Denys, F-92200 Neuilly/seine (FR)
(74) Mandataire: Ipside
(86) Numéro de dépôt international: PCT/EP2011/063124
(87) Numéro de publication internationale: WO 2012/013789

(56) Documents cités:
- EP-A1- 1 342 747
- EP-A2- 1 278 263
- EP-A2- 2 200 109
- WO-A1-2007/094568
- WO-A1-2010/067943
- DE-A1-102008 054 949
- FR-A1- 2 926 060
- JP-A- 2009 176 464
- JP-A- 2009 301 877
- US-A1- 2005 255 379

## Description

La présente invention concerne un système de refroidissement de batterie électrique destiné à équiper un véhicule de type terrestre, nautique ou aérien.

Pour répondre aux objectifs de réduction des émissions, les constructeurs automobiles se sont orientés vers des véhicules de type tout électrique ou de type électrique hybride combinant l'utilisation d'une ou deux machines électriques et d'un moteur thermique à combustion interne. Ces machines électriques sont alimentées par des batteries de puissance telles que des packs batterie comprenant plusieurs cellules unitaires. A titre d'exemple, les batteries Lithium-ion sont particulièrement plébiscitées dans les applications de véhicule électrique ou hybride en raison de leurs énergies spécifiques élevées qui contribuent à augmenter l'autonomie des véhicules.

On entend par cellules unitaires, un élément électrochimique contenu dans une enveloppe individuelle, munie d'une électrode positive et d'une électrode négative.

On entend par pack batterie, un ensemble comprenant plusieurs cellules unitaires, électriquement raccordées de manière permanente, avec les bornes, l'enveloppe et le marquage.

Ces cellules s'échauffent en fonctionnement selon les conditions d'utilisation et il est connu d'équiper ces batteries d'une installation de refroidissement utilisant un flux d'air ou liquide circulant tout autour de la cellule unitaire pour refroidir les cellules.

Une telle solution de refroidissement n'est pas optimale en termes d'encombrement. En effet il est nécessaire de maintenir un espacement suffisant entre cellules pour la circulation du fluide de refroidissement autour des cellules. Or les constructeurs de véhicules électriques ou hybrides exigent des batteries électriques plus compactes tout ayant une puissance suffisante pour couvrir les demandes croissantes en électricité à bord des véhicules liés aux nombreuses fonctions (assistance au freinage, direction électrique, ...) que ces véhicules peuvent offrir. En effet les batteries sont soumises à des limitations importantes de place du fait de la présence de nombreux organes mécaniques ou électriques dans le capot ou sur le châssis des véhicules.

Un autre problème rencontré dans ce type de solution de refroidissement est dû au fait que le fluide ne circule pas de manière homogène dans les espacements, entraînant un mauvais refroidissement des cellules, qui pourrait à terme entraîner un disfonctionnement de la batterie lié à des pertes d'intégrité de certaines cellules.

Un autre problème rencontré dans la solution de refroidissement proposée est lié à la pollution par l'air sur l'ensemble des surfaces contacts. En outre dans le cas où on utilise l'eau comme fluide de refroidissement, une éventuelle fuite d'eau dans les circuits pourrait endommager facilement les cellules.

Il serait donc intéressant de disposer d'un système de refroidissement adapté à refroidir une batterie comprenant un ensemble de cellules contenues dans un boîtier dont le mécanisme de refroidissement soit optimisé par rapport à l'arrangement de cellules, sans les problèmes constatés avec le dispositif de refroidissement de l'art antérieur.

Par ailleurs, il est connu que les batteries sont soumises à de multiples contraintes telles que des variations importantes de température, des efforts mécaniques et des agressions extérieures ayant des origines diverses, notamment par l'eau extérieure.

Les cellules Lithium-ion en boîtiers prismatiques à parois métalliques minces étant des éléments fragiles, on observe souvent des disfonctionnement de ce type de batterie liées à des pertes d'intégrité d'au moins certaines de ces cellules. Ces pertes d'intégrité des cellules résultent notamment des contraintes extérieures s'exerçant sur le caisson.

De plus, pour assurer l'alimentation en énergie du moteur électrique mais également pour couvrir les demandes croissantes en électricité à bord des véhicules liées aux nombreuses fonctions (assistance au freinage, direction électrique, ..) que ces véhicules peuvent offrir, les batteries présentent une taille plus ou moins grosse selon les équipements retenus mais dans tous les cas, plus importante que les batteries traditionnelles.

Or, il est connu que les batteries sont soumises à des limitations importantes de place du fait de la présence de nombreux organes mécaniques et/ou électriques dans le capot ou sur le châssis des véhicules.

WO2010/037796 décrit une batterie électrique comprenant les caractéristiques techniques décrites dans le préambule de la revendication 1.

L'objectif de la présente invention est donc de proposer un système de refroidissement destiné à refroidir une batterie comprenant au moins un arrangement de cellules contenues dans un boîtier qui soit simple dans sa conception et dans son mode opératoire, économique et permettant de refroidir de manière efficace et homogène les cellules tout en réduisant d'une manière significative le volume de la batterie, cette batterie électrique compacte étant apte à fournir des densités d'énergie aussi importantes que les batteries de l'art antérieur.

Encore un objet de la présente invention est une batterie électrique qui soit simple dans sa conception et dans son mode opératoire, économique et permettant de préserver l'intégrité et la durée de vie des cellules génératrices d'énergie qu'elle comporte.

Un objet supplémentaire de la présente invention est une batterie électrique permettant de varier le nombre de cellules génératrices d'énergie selon les besoins en capacité demandés par les engins motorisés.

A cet effet, l'invention concerne un système de refroidissement d'une batterie électrique comprenant un boîtier et au moins un arrangement longitudinal de cellules génératrices d'énergie placé dans ledit boîtier.

Selon l'invention, ledit système comprend :
- au moins une couche électriquement isolante et thermiquement conductrice qui relie thermiquement les cellules dudit au moins un arrangement avec une même surface de dissipation thermique placée dans ledit boîtier afin d'assurer une évacuation uniforme de l'énergie thermique générée par chacune des cellules vers ladite surface, et
- des moyens de refroidissement destinés à venir refroidir ladite surface.

Le système de l'invention utilise l'une des parois de l'enveloppe des cellules unitaires comme conducteur de chaleur afin de faire évacuer la chaleur vers un point unique qui est constitué ici par une même surface de dissipation thermique placée dans le boîtier au moyen d'une couche thermiquement conductrice et électriquement isolante. Ceci permet de refroidir de manière uniforme l'ensemble des cellules. En outre il permet de réduire l'encombrement de la batterie. En effet il n'est plus nécessaire de laisse un espacement suffisant pour faire circuler le fluide de refroidissement.

La chaleur provenant des cellules est évacuée de manière uniforme vers cette surface du boîtier de la batterie. Cette surface qui est constituée généralement d'une plaque peut donc être facilement refroidie par des moyens de refroidissement.

Le boîtier de la batterie et l'enveloppe des cellules sont réalisés dans un matériau thermiquement conducteur tel que de l'aluminium.

Ce système comprend en outre un moyen de compression exerçant sur lesdites cellules une compression le long de ou sensiblement le long de l'axe longitudinal de l'arrangement de sorte que les cellules dudit arrangement sont plaquées les unes contre les autres, cette compression mettant en contact thermiquement les cellules les unes avec les autres de sorte que ledit au moins un arrangement de cellules forment un seul bloc uniforme.

Cela permet de réduire encore plus l'encombrement des cellules en suppriment entièrement les espacements tout en améliorant l'évacuation de la chaleur en faisant participer les parois latérales de l'enveloppe des cellules.

De préférence, ledit moyen de compression comprend au moins deux plaques de compression, deux desdites plaques étant placées chacune aux extrémités dudit au moins un arrangement longitudinal de cellules correspondant.

De préférence, une desdites plaques de compression fait partie intégrante dudit boîtier.

Selon un mode de réalisation de l'invention, ladite surface de dissipation thermique est constituée par le fond dudit boîtier mis en contact thermiquement avec le bas de chacun des cellules dudit au moins un arrangement par l'intermédiaire de ladite au moins une couche électriquement isolante et thermiquement conductrice.

Selon un autre mode de réalisation de l'invention, ladite batterie comportant un seul arrangement longitudinal placé dans ledit boîtier, ladite surface de dissipation thermique est constituée par une des deux parois latérales dudit boîtier mis en contact thermiquement avec les flancs des cellules par l'intermédiaire d'au moins une couche électriquement isolante et thermiquement conductrice.

De préférence, ce système comprend de plus au moins une plaque intermédiaire thermiquement conductrice placée entre deux cellules consécutives pour augmenter la surface d'échange thermique.

De préférence, ladite au moins une plaque ayant un profil en L, les deux faces de ladite au moins une plaque sont en contact thermique avec les faces adjacentes des deux cellules et le bas ou le flanc de l'une des deux cellules en contact avec la base de ladite plaque par l'intermédiaire d'une couche électriquement isolante et thermiquement conductrice.

L'ajout des plaques intermédiaires permet de faciliter et d'augmenter l'évacuation de chaleur par le phénomène de convection. Ces plaques peuvent être réalisées dans un matériau d'aluminium ou de graphite ou tout autre matériau thermiquement conducteur.

La ou lesdites couche(s) sont constituées d'un gel thermique permettant une application uniforme et homogène sur la surface intérieure du fond et sur la base des plaques. L'air est chassé grâce à l'écrasement du gel dû au poids des cellules.

De préférence, lesdits moyens de refroidissement comportent au moins une liaison entre le fond du boîtier et une masse de manière à créer un chemin d'évacuation de l'énergie thermique emmagasinée par le fond vers ladite masse.

Alternativement ou de plus, lesdits moyens de refroidissement comportent un dispositif de refroidissement à fluide installé à proximité du boîtier ou un dispositif de refroidissement du type à changement de phase.

A titre illustratif, ce dispositif de refroidissement du type à changement de phase comporte un ou plusieurs modules à effet Peletier.

De préférence, ledit dispositif de refroidissement est un dispositif de circuit de liquide de refroidissement.

De préférence, ledit dispositif de refroidissement est un dispositif de ventilation.

L'invention concerne également une batterie électrique comprenant un boîtier et un ensemble de cellules génératrices d'énergie.

Selon l'invention,
- ladite batterie comprend au moins un arrangement longitudinal formé par au moins certaines desdites cellules, les cellules dudit arrangement étant plaquées les unes contre les autres en étant maintenues solidaires entre elles par un moyen de compression exerçant sur lesdites cellules une compression le long de ou sensiblement le long de l'axe longitudinal de l'arrangement,
- ledit arrangement longitudinal étant fixé audit boîtier par l'intermédiaire dudit moyen de compression, lequel est au moins en partie fixé audit boîtier par des organes de fixation et
- ladite batterie comprend un système de refroidissement, ce système de refroidissement comportant au moins une couche électriquement isolante et thermiquement conductrice qui relie thermiquement au moins les cellules dudit au moins un arrangement longitudinal avec une même surface de dissipation thermique placée dans ledit boîtier ou formée par au moins une des parois dudit boîtier afin d'assurer une évacuation uniforme de l'énergie thermique générée par chacune des cellules dudit arrangement vers ladite surface de dissipation, ladite couche ou au moins une desdites couches électriquement isolantes et thermiquement conductrices étant constituée d'un gel thermique.

Les cellules génératrices d'énergie d'un arrangement longitudinal ne sont pas, par conséquent, fixées directement au boîtier, elles ne sont maintenues en position que par l'intermédiaire du moyen de compression de cet arrangement qui exerce une compression uniforme sur ces cellules, ledit moyen de compression de cet arrangement étant solidaire du boîtier de la batterie.

Ces cellules génératrices d'énergie sont, par exemple, des cellules de type chlorure de sodium-métal telles que des cellules ZEBRA (Na-NiCl₂), des cellules Ni/MH, des cellules Lithium polymère, des cellules Lithium phosphate ou encore des cellules Lithium ion.

Ces cellules génératrices d'énergie sont avantageusement à boitier prismatique métallique lequel comporte une large base assurant une surface d'échange thermique importante avec ladite au moins une couche électriquement isolante et thermiquement conductrice.

Par ailleurs, le gel thermique permet de manière avantageuse d'assurer un calage des cellules de l'arrangement sur la paroi du boitier lorsque la surface de dissipation thermique est formée par une des parois du boitier de la batterie, par exemple sa plaque de fond. Ce calage permet de compenser d'une part les éventuelles irrégularités de surface de la paroi du boitier de batterie et d'autre part d'absorber les différences d'alignement des cellules maintenues en compression par les plaques d'extrémités dans l'arrangement longitudinal.

Avantageusement, les arrangements de la présente batterie facilitent le montage et la manutention des batteries électriques qui en sont équipés, ces arrangements étant plus aisément manipulables que les batteries de l'état de l'art. De plus, ces arrangements autorisent un pré-montage de la batterie, y compris des connectiques entre cellules et des faisceaux de mesure.

Dans différents modes de réalisation particuliers de cette batterie électrique, chacun ayant ses avantages particuliers et susceptibles de nombreuses combinaisons techniques possibles:
- le gel thermique constitutif de ladite au moins une couche électriquement isolante et thermiquement conductrice présente une conductivité thermique supérieure ou égale à 0,7 W/m.K, et encore mieux supérieure ou égale à 3 W/m.K.

Ce gel thermique peut être réalisé à partir d'un gel de silicone chargé en particules. A titre purement illustratif, il s'agit d'un gel de silicone chargé de particules de céramique.
- le gel thermique constitutif de ladite au moins une couche électriquement isolante et thermiquement conductrice est au moins partiellement polymérisé ou non,
- lesdits moyens de compression sont configurés de sorte que lesdites cellules dudit au moins un arrangement sont placées en retrait de ladite surface de dissipation thermique, ladite au moins une couche électriquement isolante et thermiquement conductrice constituée d'un gel thermique étant placée au moins partiellement entre lesdites cellules et ladite surface de dissipation thermique,
- au moins certaines desdites cellules d'au moins un arrangement longitudinal comportent une couche électriquement isolante et thermiquement conductrice constituée d'un gel thermique durci, ladite couche étant plaquée contre l'une de leurs parois en étant maintenue en position par au moins un élément de retenue,
- ledit élément de retenue est formé à partir d'un film thermo rétractable, ce film venant couvrir uniquement le pourtour de ladite couche électriquement isolante et thermiquement conductrice, cette batterie comprenant au moins deux arrangements longitudinaux, elle comprend un moyen de compression pour chacun de ces arrangements,
- ledit ou lesdits moyens de compression sont ajustables pour diminuer ou augmenter la dimension longitudinale dudit ou desdits arrangements,
- ledit ou lesdits moyens de compression comprennent chacun au moins deux plaques de compression, deux desdites plaques étant placées aux extrémités dudit ou desdits arrangements longitudinaux correspondants, Ces arrangements longitudinaux peuvent être placés horizontalement ou verticalement dans le boîtier, le fond du boîtier étant alors plan ou sensiblement plan.
- ledit au moins un arrangement étant placé horizontalement dans ledit boîtier, lesdites plaques sont configurées de sorte que seules lesdites plaques dudit au moins un arrangement sont en contact avec le fond du boîtier, lesdites cellules étant agencées en retrait des extrémités supérieure et inférieure desdites plaques, de manière que seules lesdites plaques transmettent les efforts s'appliquant dans la partie supérieure de la batterie au fond dudit boîtier,

On évite ainsi avantageusement de solliciter mécaniquement les cellules génératrices d'énergie de la batterie, les contraintes s'exerçant dans la partie supérieure de la batterie étant directement transmises au fond du boîtier par les plaques.

Cette géométrie de chaque arrangement longitudinal permet non seulement de protéger les cellules génératrices d'énergie mais également leur connectique.
- au moins l'une desdites plaques de compression est mobile dans ledit boîtier,

A titre purement illustratif, ladite plaque de compression comprend latéralement des ergots autorisant un déplacement en translation de cette plaque le long de rails de guidage disposés sur au moins une partie du fond du boîtier. Cette plaque comprend de plus des organes de verrouillage Alternativement, les plaques de compression étant reliées entre elles par des tirants, ces tirants sont ajustables en longueur pour autoriser un déplacement de la plaque de compression mobile. A titre d'exemple, ces tirants sont des tirants télescopiques.
- une desdites plaques de compression fait partie intégrante dudit boîtier,

Ladite plaque de compression est par exemple une paroi dudit boîtier.
- ledit ou lesdits moyens de compression comprennent de plus au moins une plaque intermédiaire placée entre deux cellules génératrices d'énergie afin d'assurer une compression uniforme desdites cellules génératrices dudit ou desdits arrangements longitudinaux correspondants,
- lesdites plaques sont reliées entre elles par au moins des tirants,
- lesdits arrangements étant placés côte-à-côte, au moins certaines de ces plaques comportent des découpes pour assurer la coopération de celles-ci en vue de réduire leur encombrement,

Il est ainsi possible d'emboîter les plaques de compression d'arrangements placés côte-à-côte afin de réduire l'encombrement de l'ensemble ainsi constitué. De plus, cet emboîtement permet de créer une cohésion entre les arrangements améliorant la structure mécanique.
- lesdites découpes autorisent un alignement ou sensiblement un alignement des tirants de deux arrangements consécutifs ainsi placés côte-à-côte,

A titre illustratif, pour des arrangements longitudinaux disposés à plat sur le fond du boîtier de la batterie, cette géométrie originale des arrangements permet de superposer les tirants de deux arrangements consécutifs de manière à réduire l'encombrement de ces arrangements placés côte-à-côte. Il est ainsi possible d'avoir une batterie électrique compacte.
- au moins une plaque d'isolation électrique et thermiquement conductrice est interposée entre deux cellules génératrices d'énergie consécutives d'au moins un arrangement,

De préférence, ces plaques d'isolation sont des plaques incompressibles.

A titre illustratif, elles peuvent être réalisées en fibres de verre.

De manière très avantageuse, l'épaisseur de cette plaque d'isolation est inférieure ou égale à 1 mm, et encore mieux à 0,5 mm afin de ne pas compromettre la compacité de la batterie électrique.
- des croisillons d'isolation sont interposés entre les arrangements.

L'invention concerne également un véhicule motorisé équipé d'au moins une batterie telle que définie ci-dessus.

De préférence, ladite masse est constituée par le châssis dudit véhicule qui agit comme un véritable radiateur pour faire dissiper la chaleur emmagasinée dans la surface de dissipation thermique du boîtier.

Cet engin motorisé peut être un véhicule de type tout électrique ou de type hybride. Ce véhicule peut être un véhicule de transport de personnes et/ou de marchandises, un engin de chantier, un véhicule nautique ou encore un aéronef.

Ce véhicule peut être équipé de roues, de chenilles ou encore d'une combinaison de ces éléments.

L'invention sera décrite plus en détail en référence aux dessins annexés dans lesquels:
- la Figure 1 montre de manière schématique une vue de côté d'un arrangement longitudinal d'une batterie électrique muni d'un système de refroidissement selon un premier mode de réalisation particulier de l'invention ;
- la Figure 2 montre de manière schématique une vue en perspective de deux arrangements longitudinaux placés côte à côte d'une batterie électrique munis de moyens de compression ;
- la Figure 3 montre de manière schématique une vue de face de deux arrangements longitudinaux placés côte à côte munis d'un système de refroidissement selon une variante du premier mode de réalisation particulier de l'invention ;
- la Figure 4 montre une vue de face d'une pluralité d'arrangements longitudinaux munis d'un système de refroidissement selon le mode de réalisation de la Figure 3 ;
- la Figure 5 montre de manière schématique une vue de côté d'un arrangement longitudinal d'une batterie électrique muni d'un système de refroidissement selon un deuxième mode de réalisation particulier de l'invention ;
- la Figure 6 montre une vue de dessus d'un arrangement longitudinal muni d'un système de refroidissement selon une variante du deuxième mode de réalisation de la Figure 5.
- la Figure 7 est une vue en perspective et partielle d'une batterie électrique selon un troisième mode de réalisation de l'invention, les parois latérales et la paroi supérieure de cette batterie ayant été omises par souci de clarté ;

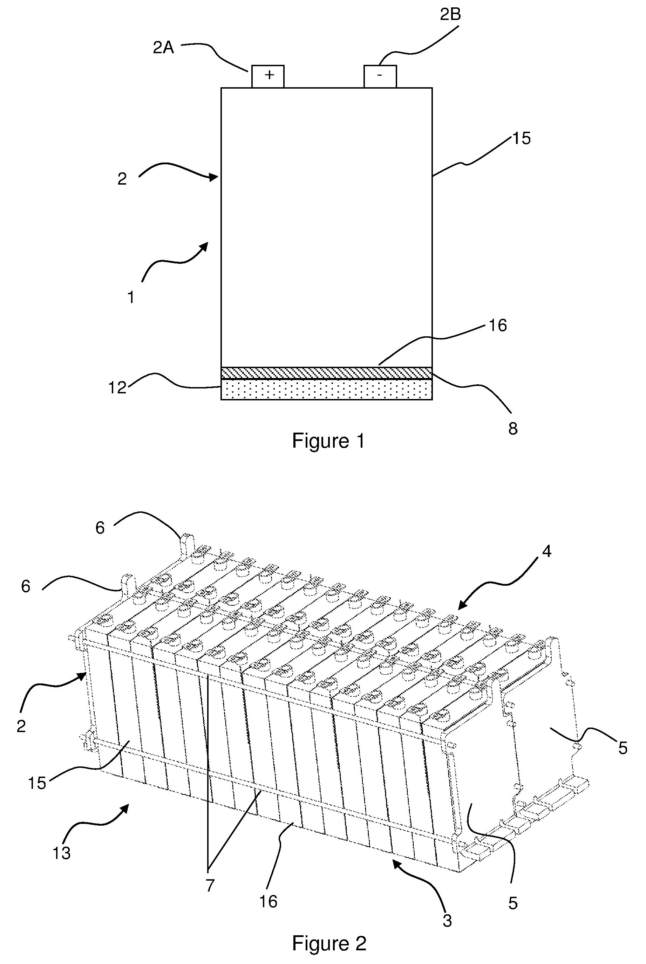

La Figure 1 montre une batterie électrique 1. La notion de batterie électrique se comprend dans la présente invention comme couvrant tout dispositif formant un réservoir d'énergie électrique rechargeable.

Cette batterie électrique comprend un boîtier réalisé dans un matériau métallique tel qu'en acier ou en aluminium. Ce boîtier a une forme généralement parallélépipédique pourvu généralement d'un fond 12 et de parois latérales 14. Il est divisé généralement en deux compartiments. L'un des deux compartiments comporte le pack batterie et l'autre un ensemble de circuits électroniques. Le pack batterie est formé d'une pluralité de cellules génératrices d'énergie 2 qui sont ici par exemple des cellules Lithium-ion à boîtier prismatique.

Sur la figure 1, les cellules 2 sont réparties en une colonne ou arrangement longitudinal, en étant alignées parallèlement les unes avec les autres.

De préférence, ces cellules sont longiformes et disposées verticalement dans le boîtier avec leur grande dimension orientée parallèlement aux parois latérales du boîtier. Mais elles peuvent être également disposées couchées avec leur grande dimension orientée parallèlement au fond du boîtier. Chacune des cellules est munie d'une borne positive 2A et d'une borne négative 2B.

Les cellules sont contenues chacune dans une enveloppe qui est réalisée dans un matériau thermiquement conducteur tel que l'aluminium. Cette enveloppe est munie généralement d'une base 16 et de flancs 15. Lors du fonctionnement de la batterie, ces cellules s'échauffent, il est donc nécessaire de refroidir ces cellules de manière à maintenir les cellules à une température de fonctionnement optimale, ou du moins entre deux limites de températures acceptables.

La figure 1 montre un système de refroidissement selon un premier mode de réalisation de l'invention. Ce système est mis en oeuvre par une couche électriquement isolante et thermiquement conductrice 8 interposée entre le bas 16 de l'enveloppe de chacune des cellules 2 et la surface intérieure du fond 12 du compartiment de pack batterie. Cette couche 8 met en contact le bas 16 de chacune des cellules avec le fond 12 afin de faire évacuer de manière uniforme l'énergie thermique générée par chacune de cellules vers le fond. Le fond 12 du boîtier constitue ainsi une même surface de dissipation thermique qui emmagasine l'énergie thermique.

On entend par "surface intérieure" dudit fond, la surface de ce fond destinée à être placée en contact avec le bas des cellules contenues dans la batterie.

Pour refroidir cette surface de dissipation thermique qui se présente généralement sous la forme d'une plaque, on peut envisager de la mettre en contact direct avec une masse ou un radiateur (non représenté). A titre d'exemple, dans le cas d'une application de véhicule de type automobile, la plaque de fond est mise en contact direct avec le châssis de véhicule, la chaleur est alors transmise à l'ensemble du châssis agissant comme un véritable radiateur.

Pour pouvoir refroidir rapidement la plaque, il est possible d'installer un circuit de fluide de refroidissement sous le fond (non représenté). Ce fluide peut être du liquide caloporteur ou de l'air. On peut envisager également de placer un capteur de température au niveau de la plaque de fond. Les mesures de température permettent d'asservir le dispositif de refroidissement.

Le système de refroidissement selon l'invention peut être mis en oeuvre pour un pack batterie dans lequel les cellules sont espacées les unes par rapport aux autres.

Dans un mode de réalisation préféré de l'invention, le système de refroidissement comporte des moyens de compression qui permettent de plaquer les cellules unes contre les autres.

La figure 2 montre un exemple de pack batterie comportant deux colonnes de cellules 3, 4. Les cellules 2 de chaque colonne sont maintenues solidaires entre elles par deux plaques de compression 5, 6 placées aux extrémités de la colonne correspondante 3, 4. Les plaques de compression 5, 6 de chaque colonne exercent sur les cellules 2 de la colonne 3, 4 une compression le long de l'axe longitudinal de cette colonne.

Des tirants 7 permettent de relier les plaques de compression 5, 6 entre elles dans chaque colonne. Ces tirants 7 assurent le réglage de la compression des cellules génératrices d'énergie 2.

Le nombre de tirants 7 reliant les plaques de compression 5, 6 de chaque colonne est variable en fonction de leur position, ceci afin d'obtenir une compression homogène sur toute la surface de chaque cellule génératrice d'énergie 2. Les positions des tirants 7 étant alors adaptées afin de conserver une bonne homogénéité de la compression.

Chacune des deux colonnes 3, 4 est fixée au boîtier par l'intermédiaire des plaques de compression 5, 6. L'une des plaques de compression placées aux extrémités de chaque colonne étant fixe, l'autre est rendue mobile pour permettre d'absorber les variations de longueur des colonnes consécutives au réglage de la compression des cellules génératrices d'énergie 2.

Dans cet arrangement longitudinal une fois compressé, se crée alors une adhérence entre chaque élément de la colonne produisant ainsi un bloc rigide.

Ainsi, en alignant les cellules 2 sous forme de colonne 3, 4 et en utilisant cette compression, on utilise les flancs des enveloppes des cellules unitaires pour conduire la chaleur vers la plaque de fond du boîtier 12 par l'intermédiaire de la couche thermiquement conductrice 8. On augmente ainsi la surface d'échange thermique. En outre le fait de plaquer les cellules les unes contre les autres permet de réduire de manière significative l'encombrement du pack batterie.

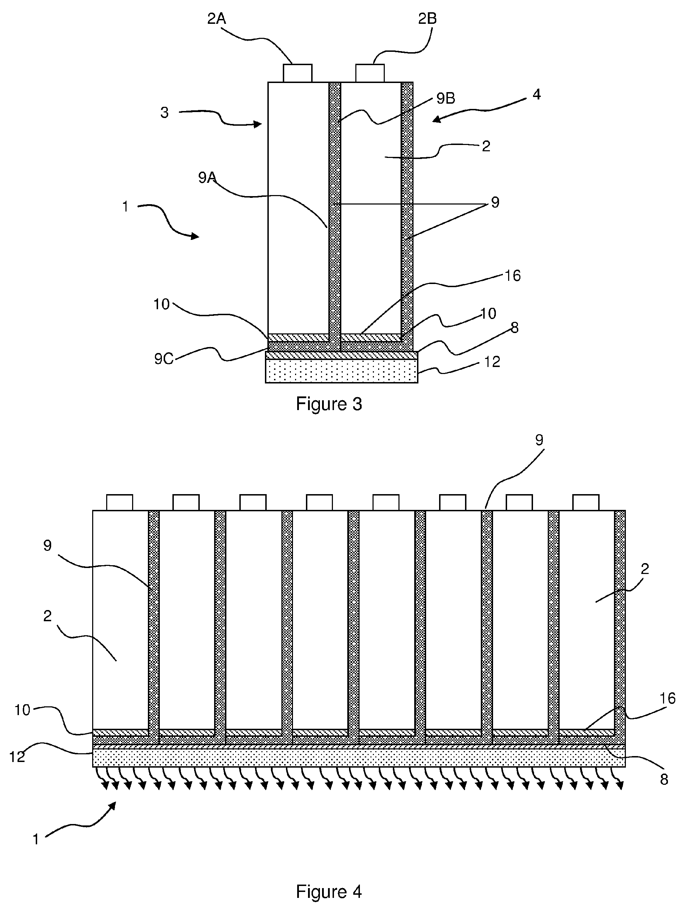

Pour augmenter davantage l'échange thermique par convection, des plaques intermédiaires sont placées entre deux cellules consécutives. La figure 3 montre un exemple de cette plaque 9 ayant un profil en L. Mais on peut également envisager une plaque ayant un profil en I ou en H orienté horizontalement.

Sur la figure 3, les deux faces 9A, 9B de la branche L sont en contact avec les faces adjacentes des deux cellules. Le bas 16 des deux cellules est en contact avec la base 9C de la plaque par l'intermédiaire d'une couche électriquement isolante et thermiquement conductrice 10 pour éviter tout présence de lame d'air. La base 9C de la plaque en L est ensuite mise en contact thermiquement avec le fond du boîtier 12 par l'intermédiaire d'une couche électriquement isolante et thermiquement conductrice 8.

La plaque 9 est réalisée dans un matériau thermiquement conducteur tel que du graphite ou de l'aluminium.

De préférence, ces couches 8, 10 sont formées d'un gel thermique ou pâte thermique qui permet un dépôt uniforme et homogène sur la surface du fond 12 et sur la base de la plaque 9C.

Comme le montre la figure 4, le système de refroidissement selon l'invention peut être facilement mis en oeuvre pour un pack batterie comprenant une pluralité de colonnes de cellules 2. En particulier Des plaques de compression similaires à celles qui sont montrées sur la figure 2 (non représentées sur la figure 4) sont placées aux extrémités de chacune des colonnes pour plaquer l'ensemble des cellules les unes contre les autres. En outre, comme dans le mode de réalisation montré sur la figure 3, des plaques intermédiaires 9 sont placées entre les cellules 2 pour améliorer l'échange thermique. Des couches thermiquement conductrices 10, 8 sont interposées respectivement entre le bas 16 de chacune des cellules 2 et la base des plaques 9C, et entre la base des plaques et le fond du boîtier 12. La chaleur générée par chacune des colonnes est ainsi transmise vers une même surface de dissipation thermique qui est constituée ici par le fond du boîtier 12.

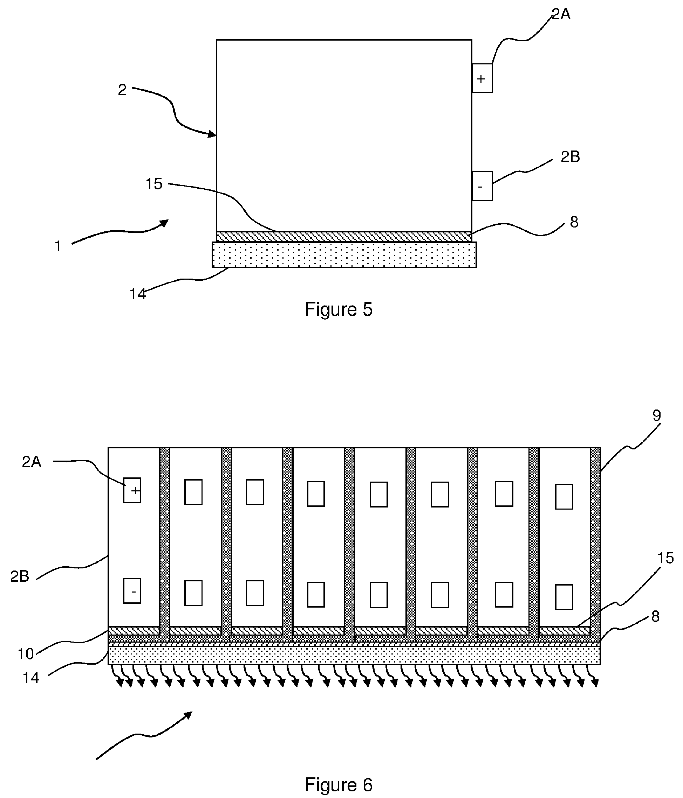

La figure 5 montre un système de refroidissement selon un deuxième mode de réalisation qui peut être mis en oeuvre lorsque la batterie comporte une seule colonne de cellules. Dans cette configuration de batterie, la couche thermiquement conductrice 8 relier thermiquement les flancs de chacune des cellules formant la colonne avec une des parois latérales du boîtier 14 qui constitue ici une même surface de dissipation thermique.

La figure 6 montre une vue de dessus de cette colonne de cellules. Comme dans le premier mode de réalisation montré sur les figures 3 et 4, afin d'augmenter la surface d'échange thermique, on place des plaques intermédiaires thermiquement conducteurs 9 entre deux cellules. Des couches thermiquement conductrices 10, 8 sont interposées respectivement entre le flanc 15 de chacune des cellules 2 et la base 9C des plaques, et entre la base 9C des plaques et la paroi latérale du boîtier 14. La chaleur générée par cette colonne est ainsi transmise vers une même surface de dissipation thermique qui est constituée ici par la paroi latérale du boîtier 14.

De manière plus générale, le montage des colonnes peut être réalisé dans différentes positions en fonction des contraintes d'intégration dans le logement batterie du véhicule. Les cellules unitaires 2 peuvent ainsi être placées debout ou couchées, les positions des tirants 7 étant alors adaptées afin de conserver une bonne homogénéité de la compression.

On ajoute également des croisillons en matière isolante, permettant d'une part d'éviter les courts circuits entre les colonnes 3, 4 mais aussi de réaliser une butée en z supplémentaire sur toute la longueur des colonnes 3, 4.

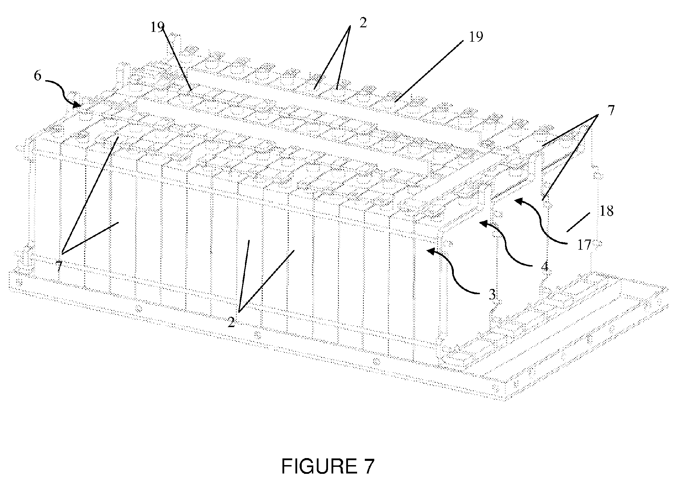

La Figure 7 est vue en perspective et partielle d'une batterie électrique selon un troisième mode de réalisation de l'invention, les parois latérales et la paroi supérieure de cette batterie ayant été omises par souci de clarté. Les éléments de la Figure 7 portant les mêmes références que les éléments des Figures 1 à 6 représentent les mêmes objets, lesquels ne seront pas décrits de nouveau ci-après. Cette batterie électrique comporte trois colonnes 3, 4, 17 qui sont posées à plat sur le fond 18 de cette batterie, une couche électriquement isolante et thermiquement conductrice constituée d'un gel thermique (non représentée) étant placée entre ces colonnes 3, 4, 17 et le fond 18 de la batterie.

Entre deux colonnes 3, 4, 17 consécutives de cette batterie est interposé un croisillon 19, ces croisillons 19 étant disposés sur toute la longueur des colonnes 3, 4, 17 afin d'assurer leur complète isolation électrique. Par ailleurs, les cellules unitaires 2 d'une partie de ces colonnes 3, 4, 17 sont électriquement raccordées.

## Revendications

1. Batterie électrique comprenant un boîtier (1) et un ensemble de cellules génératrices d'énergie (2),
- ladite batterie comprend au moins un arrangement longitudinal (3, 4) formé par au moins certaines desdites cellules, les cellules (2) dudit arrangement étant plaquées les unes contre les autres en étant maintenues solidaires entre elles par un moyen de compression (5, 6) exerçant sur lesdites cellules (2) une compression le long de ou sensiblement le long de l'axe longitudinal de l'arrangement,
- ledit arrangement longitudinal (3, 4) étant fixé audit boîtier (1) par l'intermédiaire dudit moyen de compression (5, 6), lequel est au moins en partie fixé audit boîtier (1) par des organes de fixation et en ce que
- ladite batterie comprend un système de refroidissement, ce système de refroidissement comportant au moins une couche électriquement isolante et thermiquement conductrice (8) qui relie thermiquement au moins les cellules dudit au moins un arrangement longitudinal avec une même surface de dissipation thermique (12, 14) placée dans ledit boîtier ou formée par au moins une des parois dudit boîtier afin d'assurer une évacuation uniforme de l'énergie thermique générée par chacune des cellules dudit arrangement vers ladite surface de dissipation, **caractérisée en ce que** ladite couche ou au moins une desdites couches électriquement isolantes et thermiquement conductrices (8) étant constituée d'un gel thermique.

2. Batterie selon la revendication 1, **caractérisée en ce que** le gel thermique constitutif de ladite au moins une couche électriquement isolante et thermiquement conductrice (8) est au moins partiellement polymérisé.

3. Batterie selon la revendication 1 ou 2, **caractérisée en ce que** lesdits moyens de compression sont configurés de sorte que lesdites cellules (2) dudit au moins un arrangement sont placées en retrait de ladite surface de dissipation thermique (12, 14), ladite au moins une couche électriquement isolante et thermiquement conductrice (8) constituée d'un gel thermique étant placée au moins partiellement entre lesdites cellules et ladite surface de dissipation thermique.

4. Batterie selon l'une quelconque des revendications 1 à 3, **caractérisée en ce qu'**au moins certaines desdites cellules d'au moins un arrangement longitudinal comportent une couche électriquement isolante et thermiquement conductrice (8) constituée d'un gel thermique durci, ladite couche étant plaquée contre l'une de leurs parois en étant maintenue en position par au moins un élément de retenue.

5. Batterie selon la revendication 4, **caractérisée en ce que** ledit élément de retenue est formé à partir d'un film thermo rétractable, ce film venant couvrir uniquement le pourtour de ladite couche électriquement isolante et thermiquement conductrice (8).

6. Batterie selon l'une quelconque des revendications 1 à 5, **caractérisée en ce que** ledit système de refroidissement comprend de plus des moyens de refroidissement destinés à venir refroidir ladite surface de dissipation thermique (12, 14).

7. Batterie selon la revendication 6, **caractérisée en ce que** lesdits moyens de refroidissement comportent au moins une liaison entre la surface de dissipation thermique (12, 14) et une masse de manière à créer un chemin d'évacuation de l'énergie thermique emmagasinée par ladite surface vers ladite masse.

8. Batterie selon la revendication 6 ou 7, **caractérisé en ce que** lesdits moyens de refroidissement comportent un dispositif de refroidissement à fluide ou un dispositif de refroidissement du type à changement de phase.

9. Batterie selon la revendication 8, **caractérisée en ce que** ledit dispositif de refroidissement est un dispositif de circuit de liquide de refroidissement ou un dispositif de ventilation.

10. Batterie selon l'une quelconque des revendications 1 à 9, **caractérisée en ce que** lesdits moyens de compression comprennent au moins deux plaques de compression (5, 6), deux desdites plaques (5, 6) étant placées chacune aux extrémités dudit au moins un arrangement longitudinal (3, 4) de cellules correspondant.

11. Batterie selon la revendication 10, **caractérisée en ce qu'**une desdites plaques de compression fait partie intégrante dudit boîtier.

12. Batterie selon l'une quelconque des revendications 1 à 11, **caractérisée en ce que** ladite surface de dissipation thermique est constituée par le fond dudit boîtier (12) mis en contact thermiquement avec le bas (16) de chacune des cellules (2) dudit au moins un arrangement (3, 4) par l'intermédiaire de ladite au moins une couche électriquement isolante et thermiquement conductrice (8) (8).

13. Batterie selon l'une des revendications 1 à 12, **caractérisée en ce qu'**il comprend de plus au moins une plaque intermédiaire isolante électriquement et thermiquement conductrice (9) placée entre deux cellules consécutives (2) pour augmenter la surface d'échange thermique.

14. Véhicule motorisé équipé d'au moins une batterie (1) selon l'une quelconque des revendications 1 à 13.

15. Véhicule selon les revendications 7 et 14, **caractérisé en ce que** ladite masse est constituée par le châssis dudit véhicule.

## Patentansprüche

1. Elektrische Batterie, umfassend ein Gehäuse (1) und eine Gesamtheit von Energie erzeugenden Zellen (2),
- die Batterie mindestens eine Längsanordnung (3, 4) umfasst, die von mindestens einigen der Zellen gebildet ist, wobei die Zellen (2) der Anordnung gegeneinander gedrückt sind, wobei sie miteinander durch ein Kompressionsmittel (5, 6), das auf die Zellen (2) eine Kompression entlang oder im Wesentlichen entlang der Längsachse der Anordnung ausübt, verbunden gehalten werden,
- wobei die Längsanordnung (3, 4) am Gehäuse (1) mit Hilfe des Kompressionsmittels (5, 6) befestigt ist, welches zumindest teilweise am Gehäuse (1) durch Befestigungselemente befestigt ist, und dass
- die Batterie ein Kühlsystem umfasst, wobei dieses Kühlsystem mindestens eine elektrisch isolierende und thermisch leitende Schicht (8) umfasst, die zumindest die Zellen der mindestens einen Längsanordnung mit einer selben Wärmeregulierungsfläche (12, 14), die in dem Gehäuse angeordnet oder von mindestens einer der Wände des Gehäuses gebildet ist, thermisch verbindet, um eine einheitliche Ableitung der von jeder der Zellen der Anordnung erzeugten Wärmeenergie zu der Regulierungsfläche zu gewährleisten, **dadurch gekennzeichnet, dass** wobei die oder mindestens eine der elektrisch isolierenden und thermisch leitenden Schichten (8) von einem Thermogel gebildet ist.

2. Batterie nach Anspruch 1, **dadurch gekennzeichnet, dass** das Thermogel, aus dem die mindestens eine elektrisch isolierende und thermisch leitende Schicht (8) besteht, zumindest teilweise polymerisiert ist.

3. Batterie nach Anspruch 1 oder 2, **dadurch gekennzeichnet, dass** die Kompressionsmittel derart ausgeführt sind, dass die Zellen (2) der mindestens einen Anordnung zur Wärmeregulierungsfläche (12, 14) zurückgesetzt angeordnet sind, wobei die mindestens eine elektrisch isolierende und thermisch leitende Schicht (8), die von einem Thermogel gebildet ist, zumindest teilweise zwischen den Zellen und der Wärmeregulierungsschicht angeordnet ist.

4. Batterie nach einem der Ansprüche 1 bis 3, **dadurch gekennzeichnet, dass** zumindest einige der Zellen mindestens einer Längsanordnung eine elektrisch isolierende und thermisch leitende Schicht (8) umfassen, die von einem gehärteten Thermogel gebildet ist, wobei die Schicht gegen eine ihrer Wände gedrückt ist, wobei sie durch mindestens ein Halteelement in Position gehalten wird.

5. Batterie nach Anspruch 4, **dadurch gekennzeichnet, dass** das Halteelement aus einer wärmeschrumpfbaren Folie gebildet ist, wobei diese Folie nur den Umfang der elektrisch isolierenden und thermisch leitenden Schicht (8) bedeckt.

6. Batterie nach einem der Ansprüche 1 bis 5, **dadurch gekennzeichnet, dass** das Kühlsystem ferner Kühlmittel umfasst, die dazu bestimmt sind, die Wärmeregulierungsfläche (12, 14) zu kühlen.

7. Batterie nach Anspruch 6, **dadurch gekennzeichnet, dass** die Kühlmittel mindestens eine Verbindung zwischen der Wärmeregulierungsfläche (12, 14) und einer Masse umfassen, um einen Weg zur Ableitung der gespeicherten Wärmeenergie durch die Fläche zur Masse zu erzeugen.

8. Batterie nach Anspruch 6 oder 7, **dadurch gekennzeichnet, dass** die Kühlmittel eine Kühlvorrichtung mit Fluid oder eine Kühlvorrichtung vom Typ mit Phasenwechsel umfassen.

9. Batterie nach Anspruch 8, **dadurch gekennzeichnet, dass** die Kühlvorrichtung eine Vorrichtung mit Kühlflüssigkeit oder eine Belüftungsvorrichtung ist.

10. Batterie nach einem der Ansprüche 1 bis 9, **dadurch gekennzeichnet, dass** die Kompressionsmittel mindestens zwei Kompressionsplatten (5, 6) umfassen, wobei zwei der Platten (5, 6) jeweils an den Enden der mindestens einen entsprechenden Längsanordnung (3, 4) von Zellen angeordnet sind.

11. Batterie nach Anspruch 10, **dadurch gekennzeichnet, dass** eine der Kompressionsplatten Bestandteil des Gehäuses ist.

12. Batterie nach einem der Ansprüche 1 bis 11, **dadurch gekennzeichnet, dass** die Wärmeregulierungsfläche von dem Boden des Gehäuses (12) gebildet ist, der thermisch mit dem Unterteil (16) jeder der Zellen (2) der mindestens einen Anordnung (3, 4) mit Hilfe der mindestens einen elektrisch isolierenden und thermisch leitenden Schicht (8) (8) in Kontakt gebracht wird.

13. Batterie nach einem der Ansprüche 1 bis 12, **dadurch gekennzeichnet, dass** sie ferner mindestens eine elektrisch isolierende und thermisch leitende Zwischenplatte (9) umfasst, die zwischen zwei aufeinanderfolgenden Zellen (2) angeordnet ist, um die Wärmetauschfläche zu vergrößern.

14. Motorisiertes Fahrzeug, das mit mindestens einer Batterie (1) nach einem der Ansprüche 1 bis 13 ausgestattet ist.

15. Fahrzeug nach den Ansprüchen 7 und 14, **dadurch gekennzeichnet, dass** die Masse von dem Gestell des Fahrzeugs gebildet ist.

## Claims

1. Electrical battery comprising a casing (1) and a set of energy-generating cells (2),
- said battery comprises at least one longitudinal arrangement (3, 4) formed by at least certain of said cells, the cells (2) of said arrangement being pressed against one another while being held secured together by a compression means (5, 6) exerting on said cells (2) a compression along or substantially along the longitudinal axis of the arrangement,
- said longitudinal arrangement (3, 4) being attached to said casing (1) by means of said compression means (5, 6), which is at least partly attached to said casing (1) by attachment members and in that
- said battery comprises a cooling system, this cooling system comprising at least one electrically insulating and thermally conductive layer (8) which thermally connects at least the cells of said at least one longitudinal arrangement with one and the same thermal-dissipation surface (12, 14) placed in said casing or formed by at least one of the walls of said casing in order to ensure a uniform discharge of the thermal energy generated by each of the cells of said arrangement to said dissipation surface, **characterized in that** said layer or at least one of said electrically insulating and thermally conductive layers (8) consisting of a thermal gel.

2. Battery according to Claim 1, **characterized in that** the thermal gel forming said at least one electrically insulating and thermally conductive layer (8) is at least partially polymerized.

3. Battery according to Claim 1 or 2, **characterized in that** said compression means are configured such that said cells (2) of said at least one arrangement are set back from said thermal-dissipation surface (12, 14), said at least one electrically insulating and thermally conductive layer (8) formed of a thermal gel being placed at least partially between said cells and said thermal-dissipation surface.

4. Battery according to one of Claims 1 to 3, **characterized in that** at least certain of said cells of at least one longitudinal arrangement comprise an electrically insulating and thermally conductive layer (8) consisting of a hardened thermal gel, said layer being pressed against one of their walls while being held in position by at least one retaining element.

5. Battery according to Claim 4, **characterized in that** said retaining element is formed from a heat-shrinkable film, this film covering only the periphery of said electrically insulating and thermally conductive layer (8).

6. Battery according to any one of Claims 1 to 5, **characterized in that** said cooling system also comprises cooling means designed to cool said thermal-dissipation surface (12, 14).

7. Battery according to Claim 6, **characterized in that** said cooling means comprise at least one connection between the thermal-dissipation surface (12, 14) and a mass so as to create a path for discharging the thermal energy stored by said surface to said mass.

8. Battery according to Claim 6 or 7, **characterized in that** said cooling means comprise a fluid-based cooling device or a cooling device of the phase-change type.

9. Battery according to Claim 8, **characterized in that** said cooling device is a coolant-circuit device or a ventilation device.

10. Battery according to any one of Claims 1 to 9, **characterized in that** said compression means comprise at least two compression plates (5, 6), two of said plates (5, 6) being placed each at the ends of said at least one corresponding longitudinal arrangement (3, 4) of cells.

11. Battery according to Claim 10, **characterized in that** one of said compression plates forms an integral part of said casing.

12. Battery according to any one of Claims 1 to 11, **characterized in that** said thermal-dissipation surface consists of the bottom of said casing (12) thermally placed in contact with the base (16) of each of the cells (2) of said at least one arrangement (3, 4) by means of said at least one electrically insulating and thermally conductive layer (8) (8).

13. Battery according to one of Claims 1 to 12, **characterized in that** it also comprises at least one intermediate electrically insulating and thermally conductive plate (9) placed between two consecutive cells (2) in order to increase the surface area of thermal exchange.

14. Motorized vehicle fitted with at least one battery (1) according to any one of Claims 1 to 13.

15. Vehicle according to Claims 7 and 14, **characterized in that** said mass consists of the chassis of said vehicle.
